# FASCICULE DE BREVET EUROPEEN

(11) **EP 2 977 322 B1**
(45) Date de publication et mention de la délivrance du brevet: **13.09.2017**
(21) Numéro de dépôt: 15177167.2
(22) Date de dépôt: 16.07.2015
(51) Int. Cl.: B64G 1/22, B64G 1/44, B64G 1/66

(54) **PROCÉDÉ D'ENCASTREMENT ESCAMOTABLE DE MÈTRE-RUBAN POUR UNE STRUCTURE DÉPLOYABLE ET STRUCTURE DÉPLOYABLE À MÈTRE-RUBAN**
VERFAHREN ZUM VERSENKBAREN EINBAU EINES MASSBANDS FÜR EINE ENTFALTBARE STRUKTUR, UND ENTFALTBARE STRUKTUR MIT MASSBAND
METHOD FOR RETRACTABLE EMBEDDING OF A TAPE MEASURE FOR A DEPLOYABLE STRUCTURE AND DEPLOYABLE STRUCTURE WITH TAPE MEASURE

(30) Priorité: 25.07.2014 FR 1401711
(43) Date de publication de la demande: 27.01.2016
(73) Titulaire: THALES, 92400 Courbevoie (FR)
(72) Inventeur: BAUDASSE, Yannick, 06156 CANNES LA BOCCA CEDEX (FR); VEZAIN, Stéphane, 06156 CANNES LA BOCCA CEDEX (FR); STANEK, Didier, 06156 CANNES LA BOCCA CEDEX (FR)
(74) Mandataire: Collet, Alain

(56) Documents cités:
- EP-A1- 2 471 713
- FR-A1- 2 998 876
- US-A1- 2002 112 417

## Description

La présente invention concerne un procédé d'encastrement escamotable de mètre-ruban pour une structure déployable. Elle concerne aussi une structure déployable comprenant un mètre-ruban. Elle s'applique notamment au domaine des équipements spatiaux qui doivent être déployés en orbite et plus particulièrement aux équipements spatiaux pour satellites, tels que des antennes, des générateurs solaires, des écrans thermiques, des baffles ou des télescopes.

Les structures déployables dans l'espace, de type générateur solaire par exemple, sont généralement constituées de panneaux rigides articulés entre eux, ces panneaux étant, en position stockée, empilés les uns au-dessus des autres. Ces structures ont l'avantage d'avoir une cinématique maîtrisée mais présentent le désavantage d'une masse surfacique et d'une inertie importantes. En outre, les structures rigides occupent, en position stockée, un encombrement important sous la coiffe d'un lanceur. L'espace alloué, aux structures déployables, sous la coiffe d'un lanceur, étant limité, il est important de réduire l'encombrement de ces structures déployables lorsqu'elles sont en position stockée de façon à en optimiser la surface en position déployée.

Il existe des structures planes flexibles déployables comportant une toile flexible et des mètres-ruban (aussi connus dans la littérature anglo-saxonne sous le terme tape-spring) fixés sur un même plan de la toile. En position stockée, la toile et les mètres-ruban sont enroulés autour d'un mandrin. Le déploiement de la structure plane flexible est assuré de manière autonome par le déroulement spontané des mètres-ruban lorsque le mandrin est libre en rotation. On peut citer par exemple le brevet EP 2 471 713 qui décrit ne structure déployable comprenant un mètre-ruban principal 1A, un mètre-ruban secondaire 1B et un mandrin d'enroulement 10. Les mètres-ruban sont fixés sur le mandrin en des points distincts.

En effet, les mètres-ruban sont connus dans le domaine spatial comme étant des rubans flexibles ayant une section en arc de cercle dont le rayon de courbure est convexe sur une première face et concave sur une deuxième face, ces rubans étant aptes à passer de l'état enroulé à l'état déroulé essentiellement grâce à leur énergie élastique propre. Il existe différents types de ruban ayant des propriétés propres. Les rubans monostables possèdent une position naturelle déployée et nécessitent un maintien en position stockée. Les mètres-ruban monostables ont donc une tendance naturelle à se déployer pour se retrouver dans leur état déroulé. Le déploiement des rubans monostables est souvent anarchique et incontrôlé. Les rubans bistables possèdent deux positions naturelles (position stockée et position déployée) et ne nécessitent pas de maintien en position stockée lorsque la section est totalement applatie. Leur déploiement est linéaire et contrôlé. Cependant, dans tous les cas, lorsque le déploiement est déclenché, celui-ci peut être violent et générateur de chocs, c'est-à-dire que tout le mètre-ruban peut avoir tendance à se remettre droit simultanément, sur toute sa longueur, ce qui pose un risque d'endommagement des éléments environnants ou des éléments fixés sur le mètre-ruban tels que une membrane flexible, un instrument, une antenne... Les mètres-ruban classiques peuvent ainsi présenter des difficultés en termes de contrôle de leur déploiement. Afin de réguler la vitesse de déploiement de ce type de structure, plusieurs méthodes peuvent être utilisées. On peut citer par exemple une régulation par motoréducteur électrique comme décrit dans la demande de brevet FR 2 998 876 A1 ou une régulation thermique par utilisation de mètres-ruban hybrides comme décrit dans les brevets FR 2 933 771 A1 et US 7856735.

En outre, les mètres-ruban n'ont pas la même raideur suivant l'axe de contrainte. Un effort F appliqué sur la face convexe du mètre-ruban va avoir tendance à faire fléchir le mètre-ruban alors que le même effort appliqué sur la face concave n'aura aucun effet, ce qui pose un problème d'instabilité de la structure flexible dans son état déployé. Pour résoudre ce problème de stabilité de l'état déployé, il est alors nécessaire de maintenir le mètre-ruban en position déployée par un dispositif de maintien supplémentaire ou de sur-dimensionner le mètre-ruban pour qu'il reste stable sous les efforts orbitaux, quels que soient leurs sens d'application.

Ainsi, en configuration stockée, le mètre-ruban doit être le plus compact possible, c'est-à-dire avoir un rayon d'enroulement le plus faible possible. Ce paramètre est donné par les caractéristiques physiques du ruban, généralement, le rayon d'enroulement est sensiblement égal à celui de leur rayon de courbure. Dans le cas d'un ruban composite, il peut être modifié en changeant l'empilage des plis et/ou le sens des fibres. En configuration déployée, la meilleure rigidité possible est recherchée, ce qui signifie une section la plus grande et la plus fermée possible associée à un encastrement de l'extrémité du mètre-ruban le plus important possible.

L'invention vise à pallier tout ou partie des problèmes cités plus haut en proposant un procédé d'encastrement escamotable de mètre-ruban pour une structure déployable, présentant l'avantage d'être peu encombrant, simple à réaliser, présentant une optimisation du volume de la structure déployable lorsqu'elle est stockée sous la coiffe d'un lanceur, permettant la maîtrise du déploiement et une capacité de reploiement et permettant une rigidité et une stabilité de la structure lorsqu'elle est déployée.

A cet effet, l'invention a pour objet un procédé d'encastrement escamotable de mètre-ruban pour une structure enroulable et déployable, comprenant un mètre-ruban principal ayant un axe de déploiement et de reploiement sensiblement parallèle à un axe déplié X et comportant deux extrémités, un mètre-ruban secondaire comportant deux extrémités et un mandrin d'enroulement porté par un arbre parallèle à un axe Z perpendiculaire à l'axe X, le mètre-ruban principal étant enroulé autour du mandrin, une première extrémité du mètre-ruban principal étant fixée sur le mandrin,
caractérisé en ce qu'il comporte les étapes suivantes :
- Fixation d'une première extrémité du mètre-ruban secondaire à distance d'une deuxième extrémité du mètre-ruban principal,
- Fixation d'une seconde extrémité du mètre-ruban secondaire sur le mandrin.

Avantageusement, le procédé d'encastrement escamotable peut comporter au préalable une étape de fixation ponctuelle de la deuxième extrémité du mètre-ruban principal.

Avantageusement, le procédé peut comporter les étapes suivantes :
- Déploiement simultané du mètre-ruban principal sensiblement parallèlement à l'axe X et du mètre-ruban secondaire,
- Formation d'une structure triangulée entre le mètre-ruban principal, le mètre-ruban secondaire et le mandrin.

Avantageusement, le procédé peut comporter en outre une étape de ré-enroulement du mètre-ruban principal, et le ré-enroulement du mètre-ruban principal peut être obtenu par flambage du mètre-ruban secondaire.

Avantageusement, le mètre-ruban principal peut comprendre deux faces, la première extrémité du mètre-ruban secondaire peut être fixée sur une première face de la première extrémité du mètre-ruban principal, et le flambage du mètre-ruban secondaire peut être obtenu par application d'une force au centre du mètre-ruban et normale au mètre-ruban secondaire.

Avantageusement, la force peut être appliquée entre la première extrémité du mètre-ruban secondaire et la deuxième extrémité du mètre-ruban principal.

Avantageusement, le procédé d'encastrement escamotable peut comporter en outre une étape de fixation de la première extrémité du mètre-ruban principal au centre du mandrin.

Avantageusement, la structure déployable peut comprendre au moins deux galets montés en vis-à-vis à la périphérie du mandrin, les galets peuvent être en contact avec le mètre-ruban principal, les galets et l'arbre peuvent disposer d'un degré de liberté en rotation autour de l'axe Z l'un par rapport à l'autre. Le procédé d'encastrement escamotable peut comporter les étapes suivantes :
- Guidage local du mètre-ruban principal par les galets,
- Déploiement du mètre-ruban principal dans une direction sensiblement parallèle à l'axe X.

Avantageusement, les galets peuvent être des galets chauffants, et le procédé d'encastrement escamotable peut comporter au préalable une étape de réchauffage local du mètre-ruban principal par les galets chauffants.

L'invention a aussi pour objet une structure déployable comprenant un mètre-ruban principal s'étendant en position déployée selon un axe X et comportant deux extrémités, un mètre-ruban secondaire comportant deux extrémités et un mandrin d'enroulement porté par un arbre selon un axe Z perpendiculaire à l'axe X, le mètre-ruban principal étant enroulé autour du mandrin, une première extrémité du mètre-ruban principal étant fixée sur le mandrin, caractérisé en ce qu'une première extrémité du mètre-ruban secondaire est fixée à distance de la première extrémité du mètre-ruban principal, et en ce qu'une seconde extrémité du mètre-ruban secondaire est fixée sur le mandrin en un point distinct du point de la première extrémité du mètre-ruban principal.

Avantageusement, la structure déployable comprend au moins deux galets montés en vis-à-vis à la périphérie du mandrin, les galets étant en contact avec le mètre-ruban principal, les galets et l'arbre étant fixes, le mandrin disposant d'un degré de liberté en rotation autour de l'axe Z, les galets étant aptes à guider les mètres-ruban principaux.

Avantageusement, les galets sont des galets chauffants.

L'invention sera mieux comprise et d'autres avantages apparaîtront à la lecture de la description détaillée d'un mode de réalisation donné à titre d'exemple, description illustrée par le dessin joint dans lequel :
- la figure 1 illustre avec trois schémas, en coupe dans un plan perpendiculaire à l'axe Z, le déploiement d'un mètre-ruban principal selon l'invention,
- la figure 2 représente une première variante de la structure déployable de deux mètres-ruban en configuration semi-déployée et déployée selon l'invention,
- la figure 3 représente une deuxième variante de la structure déployable de deux mètres-ruban en configuration semi-déployée et déployée selon l'invention,
- la figure 4 représente une troisième variante de la structure déployable de deux mètres-ruban en configuration semi-déployée et déployée selon l'invention,
- la figure 5 représente le flambage du mètre-ruban secondaire pour obtenir le ré-enroulement du mètre-ruban principal,
- la figure 6 représente une autre variante de la structure déployable de deux mètres-ruban en configuration semi-déployée et déployée selon l'invention,
- la figure 7 représente les étapes du procédé d'encastrement escamotable selon l'invention.

Par souci de clarté, les mêmes éléments porteront les mêmes repères dans les différentes figures.

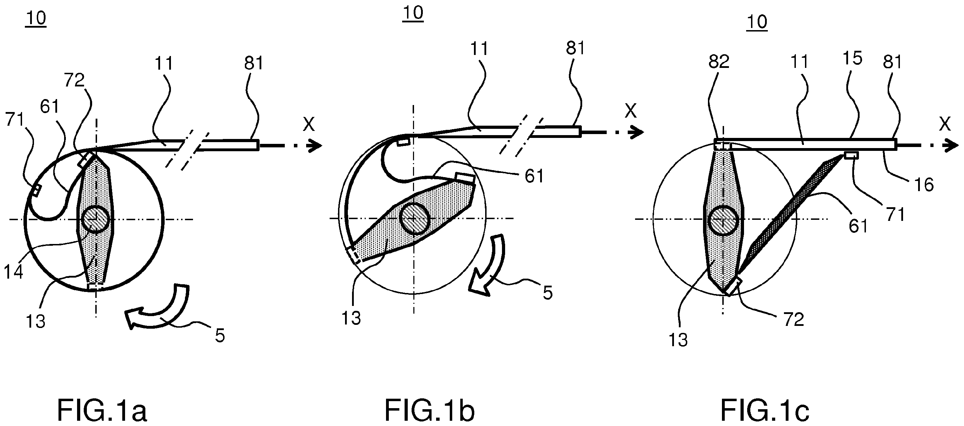

La figure 1 illustre avec trois schémas, en coupe dans un plan perpendiculaire à un axe Z, une structure déployable 10 avec un mètre-ruban principal 11 selon l'invention. La structure 10 comprend le mètre-ruban principal 11 s'étendant en position déployée selon un axe X et comporte deux extrémités 81, 82. La structure 10 comprend un mètre-ruban secondaire 61 qui comporte deux extrémités 71, 72. La structure déployable 10 comprend aussi un mandrin d'enroulement 13 qui est porté par un arbre 14 selon l'axe Z perpendiculaire à l'axe X. Le mètre-ruban principal 11 est enroulé autour du mandrin 13. Une première extrémité 82 du mètre-ruban principal 11 est fixée sur le mandrin 13. Selon l'invention, le procédé d'encastrement escamotable comporte les étapes suivantes :
- Fixation d'une première extrémité 71 du mètre-ruban secondaire 61 à distance d'une deuxième extrémité 81 du mètre-ruban principal 11,
- Fixation d'une seconde extrémité 72 du mètre-ruban secondaire 61 sur le mandrin 13 en un point distinct du point de la première extrémité 82 du mètre-ruban principal 11.

Une flèche 5 indique le sens de rotation du mandrin 13. Sur le schéma 1a, la flèche 5 tourne dans le sens horaire. Le mètre-ruban principal 11 est enroulé autour du mandrin 13 et une partie du mètre-ruban principal 11 comprenant l'extrémité 81 est déployée parallèlement à l'axe déplié X. Sur le schéma 1b, le mandrin 13 a effectué une rotation autour de l'axe Z dans le sens horaire comme indiqué par la flèche 5. Le mètre-ruban principal 11 se déploie davantage selon l'axe X. Le mètre-ruban secondaire 61 reste enroulé, ses deux extrémités 71, 72 étant fixées respectivement à l'extrémité 81 du mètre-ruban principal 11 et au mandrin 13. Sur le schéma 1c, le mètre-ruban principal 11 est complètement déployé. Le mètre-ruban secondaire 61 est lui aussi en position déployée et forme une structure triangulée avec le mètre-ruban principal 11 et le mandrin 13. La structure triangulée ainsi obtenue constitue une jambe de force, assure un bon maintien du mètre-ruban principal 11 et lui confère une bonne rigidité.

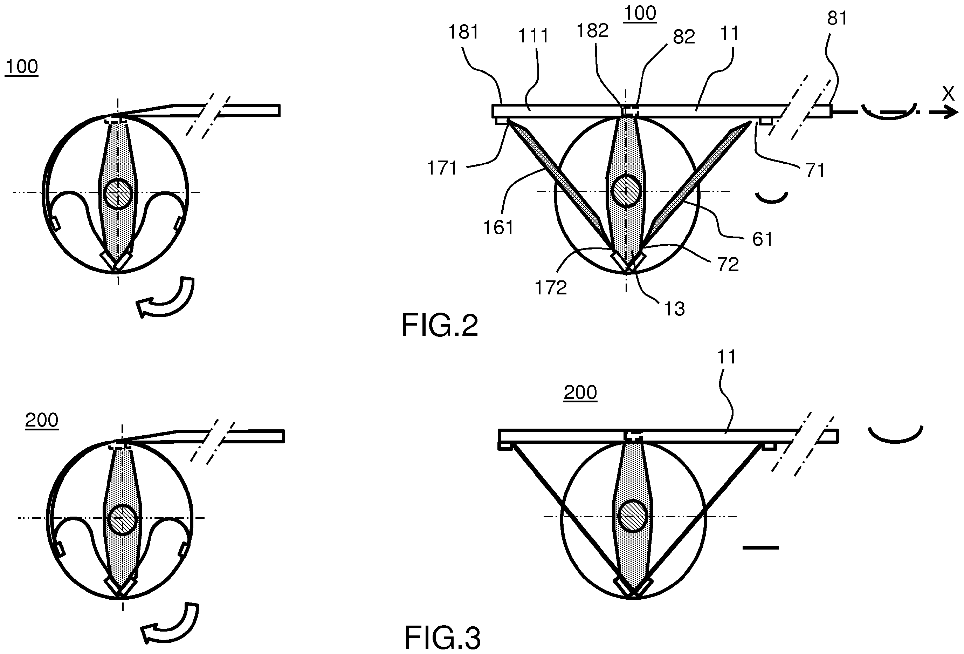

La figure 2 représente une première variante d'une structure déployable 100 comprenant deux mètres-ruban en configuration semi-déployée et déployée selon l'invention. Tous les éléments de la structure déployable 100 de la figure 2 sont identiques aux éléments de la structure déployable 10 de la figure 1. En plus, la structure déployable comprend un deuxième mètre-ruban principal 111 qui a un axe de déploiement et de reploiement sensiblement parallèle à l'axe déplié X, et se déploie dans la direction opposée à la direction de déploiement du premier mètre-ruban principal 11. Le deuxième mètre-ruban principal 111 comporte deux extrémités 181, 182. La structure déployable 100 comprend un deuxième mètre-ruban secondaire 161 qui comporte deux extrémités 171, 172. Le deuxième mètre-ruban principal 111 est également enroulé autour du mandrin 13. De même que pour le premier mètre-ruban principal 11, une première extrémité 182 du mètre-ruban principal 111 est fixée sur le mandrin 13. Et, tout comme le premier mètre-ruban secondaire 61, le deuxième mètre-ruban secondaire 161 est enroulé, ses deux extrémités 171, 172 étant fixées respectivement à l'extrémité 181 du mètre-ruban principal 111 et au mandrin 13. La présence de deux mètres-ruban principaux permet de déployer une structure flexible de plus grande surface tout en conservant un bon maintien et une bonne rigidité de la structure déployable.

La figure 3 représente une deuxième variante d'une structure déployable de deux mètres-ruban en configuration semi-déployée et déployée selon l'invention. Tous les éléments de la figure 3 sont identiques aux éléments de la figure 2. Sur la figure 3, contrairement à la figure 2, on ne parleplus de mètres-ruban secondaires mais de jambes de force secondaires, puisqu'il ne s'agit plus de mètres-ruban à proprement parler. Néanmoins, les jambes de force considérées contribuent de la même manière à former une structure triangulée constituée par une jambe de force.

Sur la figure 3, les deux jambes de force secondaires sont des lames planes. Une lame plane en configuration déployée offre une bonne résistance à la traction, mais n'offre aucune résistance en compression. En position déployée, la lame 61 ameliore grandement la raideur de l'ensemble dans le sens de raideur plus faible du mètre-ruban (couple dans le sens anti-horaire autour de Y). La lame opposée 161 améliore grandement la raideur de l'ensemble dans le sens de raideur opposé le moins faible du mètre-ruban (couple dans le sens horaire autour de Y).

Il offre par contre une meilleure capacité de stockage qu'un mètre-ruban du fait qu'une section très faible est généralement suffisante pour reprendre les charges en traction.

Afin de gagner en encombrement en position stockée, et faciliter l'enroulement, il peut donc être envisagé d'utiliser des câbles, lames planes ou bandes flexibles en remplacement des mètres-ruban. Cependant ceux-ci ne travaillent qu'en traction uniquement. Il faut donc que ceux-ci travaillent par couple et soient mis en opposition en utilisant la raideur du mètre-ruban principal. En effet, lorsqu'on applique un couple sur le mètre-ruban principal, une bande flexible retient l'effort, si on applique un couple dans l'autre sens, c'est la bande flexible opposée qui agit.

Les mètres-ruban secondaires constituent un système de triangulation sur le mètre-ruban 11.

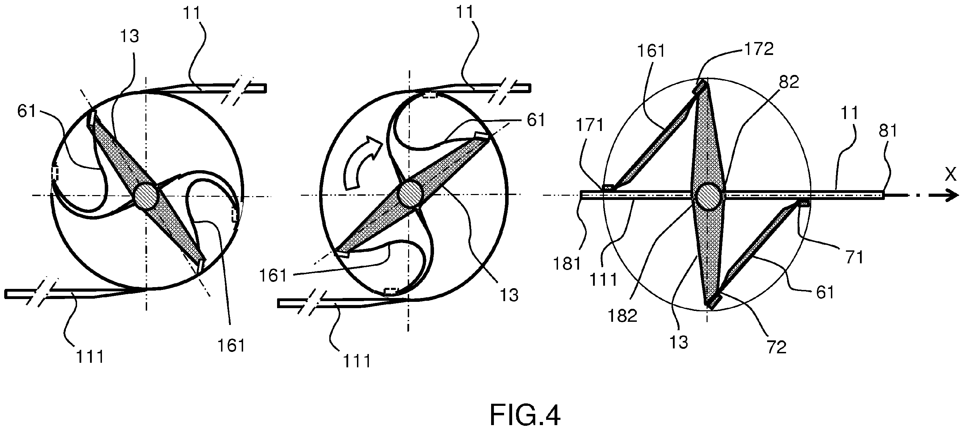

La figure 4 représente une troisième variante d'une structure déployable de deux mètres-ruban en configuration stockée, semi-déployée et déployée selon l'invention. Tous les éléments de la figure 4 sont identiques aux éléments de la figure 2. Sur la figure 4, la première extrémité 82 du mètre-ruban principal 11 est fixée au centre du mandrin 13. De même, la première extrémité 182 du mètre-ruban principal 11 est fixée au centre du mandrin 13. Les deux mètres-ruban secondaires 61,161 sont enroulés, leurs deux extrémités 71, 72 et 171, 172 respectivement étant fixées à l'extrémité 81, respectivement 181 des mètres-ruban principaux 11 et 111 et au mandrin 13. Comme expliqué précédemment, la présence de deux mètres-ruban principaux permet de déployer une structure flexible de plus grande surface tout en conservant un bon maintien et une bonne rigidité de la structure déployable avec les deux jambes de force. De plus, cette configuration, en plus d'offrir une grande surface de structure flexible en position déployée, a l'avantage de ne pas être encombrante en position stockée. Par ailleurs, comme les mètres-ruban principaux 11, 111 sont enroulés autour du mandrin 13 et fixés en son centre, il y a une grande stabilité de l'ensemble et une forte raideur à l'encastrement. De plus, le mandrin 13 n'est pas positionné en bout de la structure une fois les mètres-ruban principaux 11, 111 déroulés. Cette caractéristique joue un rôle important dans la rigidité de la structure.

Nous pouvons noter toutefois que la figure 4 représente deux mètres-ruban principaux 11 et 111, mais l'invention s'applique également au cas de figure avec un seul mètre-ruban principal fixé au mandrin entre ses deux extrémités.

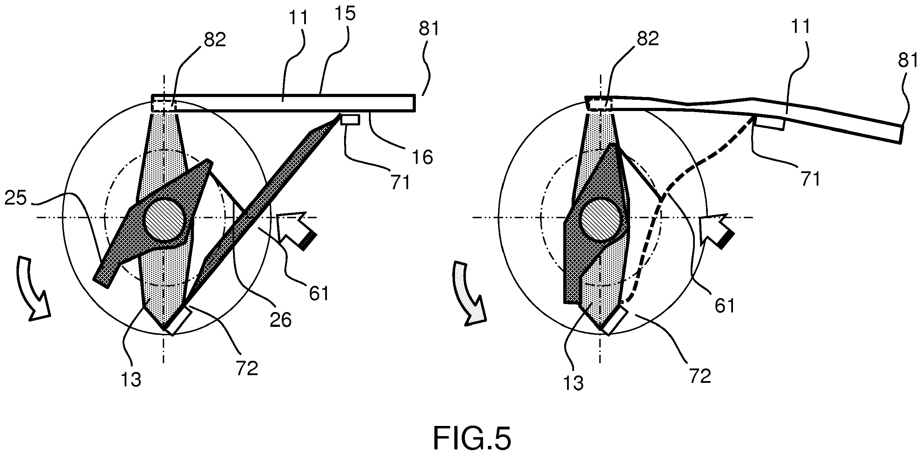

La figure 5 représente le flambage du mètre-ruban secondaire 61 pour obtenir le ré-enroulement du mètre-ruban principal 11. Le mètre-ruban principal 11 comprend deux faces 15, 16. La première extrémité 71 du mètre-ruban secondaire 61 est fixée sur une première face 16 de la deuxième extrémité 81 du mètre-ruban principal 11. Le repliement de la jambe de force composée par le mètre-ruban 61 peut être réalisé par le flambage de celui-ci. Le flambage peut être obtenu par l'application d'une force au centre du mètre-ruban secondaire et normale à celui-ci. En procédant ainsi, le mètre-ruban secondaire 61 flambe, c'est-à-dire qu'il ne forme plus de structure triangulée avec le mètre-ruban principal 11 et le mandrin 13. La partie du mètre-ruban secondaire 61 située entre les deux extrémités 71 et 72 se rapproche du mandrin et tend à se ré-enrouler. Le flambage ainsi initié autorise l'enroulement de la structure. Du fait de la fixation de l'extrémité 71 du mètre-ruban secondaire 61 à l'extrémité 81 du mètre-ruban principal 11, le mètre-ruban principal 11 n'est plus dans sa position complètement déployée. Il peut alors se ré-enrouler.

La force appliquée perpendiculairement à l'axe principal du mètre-ruban principal 61 peut être une force appliquée manuellement ou par motorisation.

Généralement, en utilisation réelle, la structure déployable 10 n'est utilisée que pour un seul déploiement. Néanmoins de nouveaux besoins de mission apparaissent. Notamment le transfert ou le remorquage de satellite d'une orbite basse vers une orbite haute. Lors de l'accostage, pour le pilotage du véhicule de transfert, il faut le moins d'inertie possible, c'est-à-dire que la présence de structures déployables de grandes dimensions n'est pas favorable. Il faut éviter aussi toute interférence avec les satellites que l'on cherche à accoster. De ce fait, il est préférable d'enrouler les structures déployables. Quand le satellite est accroché, on peut de nouveau déployer la structure.

Une alternative à l'application d'une force sur le mètre-ruban principal 11 est aussi présentée sur la figure 5. Sur la figure 5, une pièce 25 est positionnée sur le mandrin 13. La pièce 25 est mobile en rotation autour de l'axe Z. A cette pièce 25 est fixée une lame ou un câble flexible 26, reliant la pièce 25 au mètre-ruban secondaire 61. Une rotation de la pièce 25 dans le sens correspondant au sens de reploiement du mètre-ruban principal, déplace le mètre-ruban secondaire 61 vers le mandrin 13 et initie ainsi le flambage. La pièce 25 vient ensuite en butée sur le mandrin 13 et entraîne ainsi ce dernier, permettant l'enroulement du mètre-ruban principal 11, le mètre-ruban secondaire 61 ne formant plus de structure triangulée avec le mètre-ruban principal 11 et le mandrin 13. Comme expliqué précédemment, la partie du mètre-ruban secondaire 61 située entre les deux extrémités 71 et 72 se rapproche du mandrin et tend à se ré-enrouler. Du fait de la fixation de l'extrémité 71 du mètre-ruban secondaire 61 à l'extrémité 81 du mètre-ruban principal 11, le mètre-ruban principal 11 n'est plus dans sa position complètement déployée. Il peut alors se ré-enrouler.

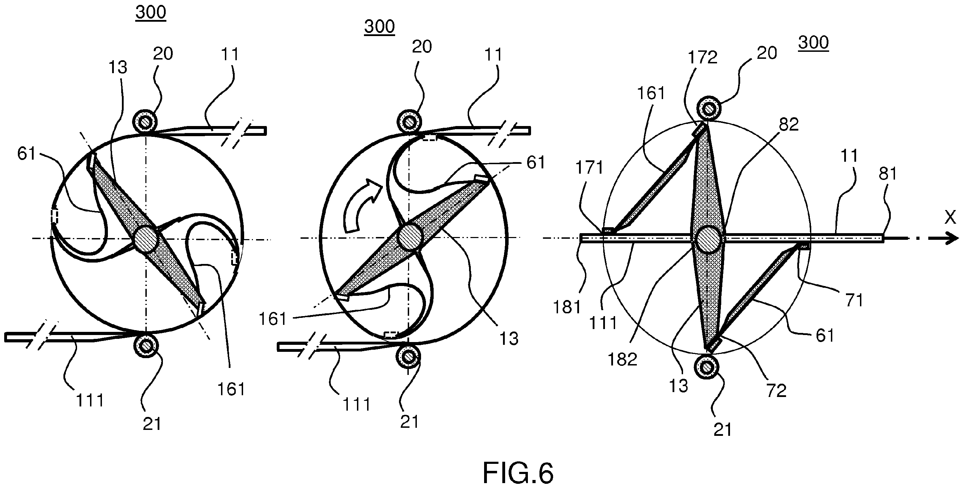

La figure 6 représente une autre variante de deux mètres-ruban d'une structure déployable 300 en configuration semi-déployée et déployée selon l'invention. Tous les éléments de la figure 6 sont identiques aux éléments de la figure 4. Sur la figure 6, la structure déployable 300 comprend en outre au moins deux galets 20, 21 montés en vis-à-vis à la périphérie du mandrin 13. Les galets 20, 21 sont en contact avec les mètres-ruban 11, 111. Les galets 20, 21 et l'arbre 14 sont fixes, le mandrin 13 dispose d'un degré de liberté en rotation autour de l'axe Z. Les galets 20, 21 sont aptes à guider les mètres-ruban principaux. Les galets 20, 21 assurent une fonction de guidage des mètres-ruban 11, 111. Les deux galets 20, 21 permettent notamment d'assurer un enroulement correct des mètres-ruban 11, 111 autour du mandrin 13 pendant une phase de reploiement et permettent de pouvoir reployer le mètre-ruban en vol, par exemple quand la structure flexible est montée sur un satellite.

Pour réguler le déploiement des mètres-ruban, il est possible de chauffer le mandrin 13. Avantageusement, les galets 20, 21 peuvent être des galets chauffants. Les galets chauffants permettent de réchauffer localement en deux points, avantageusement diamétralement opposés, les mètres-ruban, provoquant ainsi leur déploiement et également la rotation du mandrin 13 qui peut donc chauffer la section de mètre-ruban alors mise en contact avec les galets 20, 21, comme représenté schématique sur la figure 6b, les flèches indiquant la rotation autour de l'axe Z. Le réchauffement local par les galets chauffants permet d'obtenir un déploiement régulé de la structure. De plus, comme le réchauffement est local, cette configuration est énergétiquement économique puisqu'il n'est pas nécessaire de réchauffer l'ensemble du mètre-ruban et/ou du mandrin. Cette caractéristique est particulièrement intéressante pour une utilisation sur satellite.

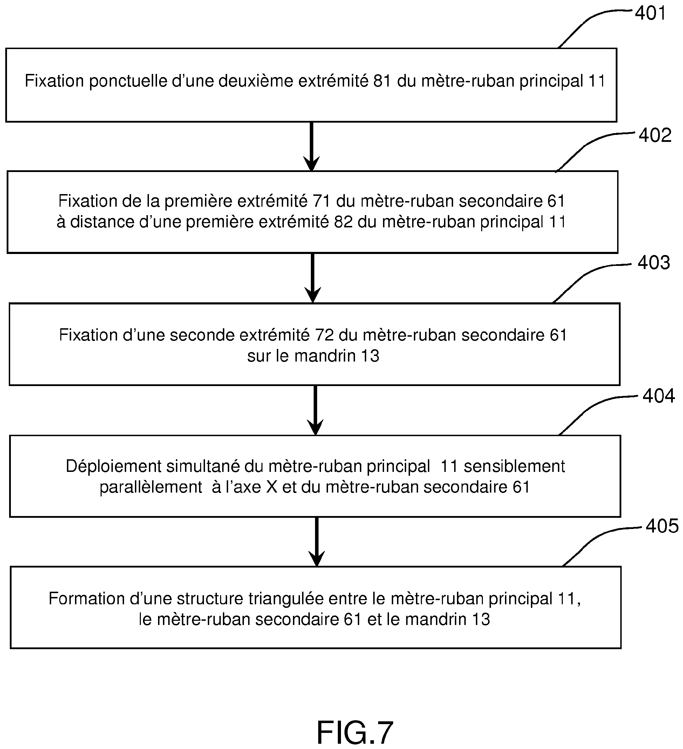

La figure 7 représente les étapes du procédé d'encastrement escamotable selon l'invention. Le procédé comprend les étapes suivantes :
- Fixation ponctuelle de la deuxième extrémité 81 du mètre-ruban principal 11, étape 401
- Fixation de la première extrémité 71 du mètre-ruban secondaire 61 à distance d'une première extrémité 82 du mètre-ruban principal 11, étape 402
- Fixation d'une seconde extrémité 72 du mètre-ruban secondaire 61 sur le mandrin 13, étape 403
- Déploiement simultané du mètre-ruban principal sensiblement parallèlement à l'axe X et du mètre-ruban secondaire, étape 404
- Formation d'une structure triangulée entre le mètre-ruban principal, le mètre-ruban secondaire et le mandrin, étape 405.

On peut également noter la simplicité d'assemblage ainsi qu'une maîtrise et reproductibilité du couple lors du déploiement et reploiement des mètres-ruban.

L'invention peut s'appliquer aux mètres-ruban hybrides, constitués d'une première structure motrice (par exemple en fibre de carbone) qui permet le déploiement du mètre-ruban, et d'une partie régulatrice thermoélastique qui favorise ou limite le déploiement en fonction de la température qui lui est appliquée. Utiliser un phénomène naturel de changement de viscosité d'un matériau thermoplastique (ou d'un matériau ayant une température de transformation sensiblement inférieure à la température de transformation du matériau du ruban moteur) par la température garantit une bonne fiabilité et une reproductibilité du déploiement.

L'invention présente une simplicité d'assemblage, avec peu de pièces à assembler. Le déroulement du mètre-ruban est bien maîtrisé. En effet, le mètre-ruban peut être guidé par les galets 20, 21, et localement réchauffé dans le cas où les galets 20, 21 sont chauffants, permettant ainsi de réguler son déploiement.

Enfin, le gerbage est autonome car il est obtenu par la bi-stabilité du mètre-ruban hybride avec ses deux positions stables (enroulée et déployée).

## Revendications

1. Procédé d'encastrement escamotable de mètre-ruban pour une structure déployable, comprenant un mètre-ruban principal (11) s'étendant en position déployée selon un axe X et comportant deux extrémités (81, 82), un mètre-ruban secondaire (61) comportant deux extrémités (71, 72) et un mandrin d'enroulement (13) porté par un arbre (14) selon un axe Z perpendiculaire à l'axe X, le mètre-ruban principal (11) étant enroulé autour du mandrin (13), une première extrémité (82) du mètre-ruban principal (11) étant fixée sur le mandrin (13),
**caractérisé en ce qu'**il comporte les étapes suivantes :
• Fixation d'une première extrémité (71) du mètre-ruban secondaire (61) sur le mètre-ruban principal (11) à distance de la première extrémité (82) du mètre-ruban principal (11),
• Fixation d'une seconde extrémité (72) du mètre-ruban secondaire (61) sur le mandrin (13) en un point distinct du point de la première extrémité (82) du mètre-ruban principal (11), de façon à former en position déployée du mètre-ruban principal (11) une structure triangulée entre le mètre-ruban principal (11), le mètre-ruban secondaire (61) et le mandrin (13).

2. Procédé d'encastrement escamotable selon la revendication 1, **caractérisé en ce qu'**il comporte au préalable une étape de fixation ponctuelle d'une deuxième extrémité (81) du mètre-ruban principal (11).

3. Procédé d'encastrement escamotable selon l'une des revendications précédentes, **caractérisé en ce qu'**il comporte les étapes suivantes :
• Déploiement simultané du mètre-ruban principal (11) sensiblement parallèlement à l'axe X et du mètre-ruban secondaire (61),
• Formation d'une structure triangulée entre le mètre-ruban principal (11), le mètre-ruban secondaire (61) et le mandrin (13).

4. Procédé d'encastrement escamotable selon l'une des revendications précédentes, **caractérisé en ce qu'**il comporte en outre une étape de ré-enroulement du mètre-ruban principal (11), et **en ce que** le ré-enroulement du mètre-ruban principal (11) est obtenu par flambage du mètre-ruban secondaire (61).

5. Procédé d'encastrement escamotable selon la revendication 4, le mètre-ruban principal (11) comprenant deux faces (15, 16), **caractérisé en ce que** la première extrémité (71) du mètre-ruban secondaire (61) est fixée sur une première face (16) de la deuxième extrémité (81) du mètre-ruban principal (11), et **en ce que** le flambage du mètre-ruban secondaire (61) est obtenu par application d'une force au centre du mètre-ruban secondaire (61) et normale au mètre-ruban secondaire (61).

6. Procédé d'encastrement escamotable selon la revendication 5, **caractérisé en ce que** la force est appliquée entre la première extrémité (71) du mètre-ruban secondaire (61) et la deuxième extrémité (81) du mètre-ruban principal (11).

7. Procédé d'encastrement escamotable selon l'une des revendications 1 à 6, **caractérisé en ce qu'**il comporte en outre une étape de fixation de la première extrémité (82) du mètre-ruban principal (11) au centre du mandrin (13).

8. Procédé d'encastrement escamotable selon la revendication 7, la structure déployable comprenant au moins deux galets (20, 21) montés en vis-à-vis à la périphérie du mandrin (13), les galets (20, 21) étant en contact avec le mètre-ruban principal (11), les galets (20, 21) et l'arbre (14) disposant d'un degré de liberté en rotation autour de l'axe Z l'un par rapport à l'autre, **caractérisé en ce qu'**il comporte les étapes suivantes :
• Guidage local du mètre-ruban principal (11) par les galets (20, 21),
• Déploiement du mètre-ruban principal (11) dans une direction sensiblement parallèle à l'axe X.

9. Procédé d'encastrement escamotable selon la revendication 8, les galets étant des galets chauffants, **caractérisé en ce qu'**il comporte au préalable une étape de réchauffage local du mètre-ruban principal (11) par les galets chauffants (20, 21).

10. Structure déployable comprenant un mètre-ruban principal (11) s'étendant en position déployée selon un axe X et comportant deux extrémités (81, 82), un mètre-ruban secondaire (61) comportant deux extrémités (71, 72) et un mandrin d'enroulement (13) porté par un arbre (14) selon un axe Z perpendiculaire à l'axe X, le mètre-ruban principal (11) étant enroulé autour du mandrin (13), une première extrémité (82) du mètre-ruban principal (11) étant fixée sur le mandrin (13), **caractérisée en ce qu'**une première extrémité (71) du mètre-ruban secondaire (61) est fixée sur le mètre-ruban principal (11) à distance de la première extrémité (82) du mètre-ruban principal (11), et **en ce qu'**une seconde extrémité (72) du mètre-ruban secondaire (61) est fixée sur le mandrin (13) en un point distinct du point de la première extrémité (82) du mètre-ruban principal (11), de façon à former en position déployée du mètre-ruban principal (11) une structure triangulée entre le mètre-ruban principal (11), le mètre-ruban secondaire (61) et le mandrin (13).

11. Structure déployable selon la revendication 10, **caractérisée en ce qu'**elle comprend au moins deux galets (20, 21) montés en vis-à-vis à la périphérie du mandrin (13), **en ce que** les galets (20, 21) sont en contact avec le mètre-ruban principal (11), **en ce que** les galets (20, 21) et l'arbre (14) sont fixes, le mandrin (13) disposant d'un degré de liberté en rotation autour de l'axe Z, les galets (20, 21) étant aptes à guider les mètres-ruban principaux (11, 111).

12. Structure déployable selon la revendication 11, **caractérisée en ce que** les galets (20, 21) sont des galets chauffants.

## Patentansprüche

1. Verfahren zum versenkbaren Einbau eines Maßbands für eine entfaltbare Struktur, umfassend ein Hauptmaßband (11), das sich in entfalteter Position entlang einer X-Achse erstreckt und zwei Enden (81, 82) umfasst, ein Sekundärmaßband (61) umfassend zwei Enden (71, 72) und einen Aufrolldorn (13), der von einer Welle (14) entlang einer Z-Achse senkrecht zur X-Achse getragen wird, wobei das Hauptmaßband (11) um den Dorn (13) aufgerollt wird, wobei ein erstes Ende (82) des Hauptmaßbands (11) auf dem Dorn (13) befestigt ist,
**dadurch gekennzeichnet, dass** es die folgenden Schritte umfasst:
• Befestigung eines ersten Endes (71) des Sekundärmaßbands (61) auf dem Hauptmaßband (11) beabstandet vom ersten Ende (82) des Hauptmaßbands (11),
• Befestigung eines zweiten Endes (72) des Sekundärmaßbands (61) auf dem Dorn (13) an einem anderen Punkt als der Punkt des ersten Endes (82) des Hauptmaßbands (11), um in entfalteter Position des Hauptmaßbands (11) eine dreieckige Struktur zwischen dem Hauptmaßband (11), dem Sekundärmaßband (61) und dem Dorn (13) zu bilden.

2. Verfahren zum versenkbaren Einbau nach Anspruch 1, **dadurch gekennzeichnet, dass** es vorher einen punktuellen Befestigungsschritt eines zweiten Endes (81) des Hauptmaßbands (11) umfasst.

3. Verfahren zum versenkbaren Einbau nach einem der vorhergehenden Ansprüche, **dadurch gekennzeichnet, dass** es die folgenden Schritte umfasst:
• Geleichzeitige Entfaltung des Hauptmaßbands (11) im Wesentlichen parallel zur X-Achse und des Sekundärmaßbands (61),
• Bildung einer dreieckigen Struktur zwischen dem Hauptmaßband (11), dem Sekundärmaßband (61) und dem Dorn (13).

4. Verfahren zum versenkbaren Einbau nach einem der vorhergehenden Ansprüche, **dadurch gekennzeichnet, dass** es außerdem einen Schritt zum Wiederaufrollen des Hauptmaßbands (11) umfasst, und dass das Wiederaufrollen des Hauptmaßbands (11) durch Knicken des Sekundärmaßbands (61) erlangt wird.

5. Verfahren zum versenkbaren Einbau nach Anspruch 4, das Hauptmaßband (11) umfassend zwei Seiten (15, 16), **dadurch gekennzeichnet, dass** das erste Ende (71) des Sekundärmaßbands (61) auf einer ersten Seite (16) des zweiten Endes (81) des Hauptmaßbands (11) befestigt ist, und dass das Knicken des Sekundärmaßbands (61) durch Anwendung einer Kraft auf die Mitte des Sekundärmaßbands (61) und normal auf das Sekundärmaßband (61) erlangt wird.

6. Verfahren zum versenkbaren Einbau nach Anspruch 5, **dadurch gekennzeichnet, dass** die Kraft zwischen dem ersten Ende (71) des Sekundärmaßbands (61) und dem zweiten Ende (81) des Hauptmaßbands (11) angewendet wird.

7. Verfahren zum versenkbaren Einbau nach einem der Ansprüche 1 bis 6, **dadurch gekennzeichnet, dass** es außerdem einen Befestigungsschritt des ersten Endes (82) des Hauptmaßbands (11) an der Mitte des Dorns (13) umfasst.

8. Verfahren zum versenkbaren Einbau nach Anspruch 7, die versenkbare Struktur umfassend mindestens zwei Rollen (20, 21), die gegenüber der Peripherie des Dorns (13) montiert sind, wobei die Rollen (20, 21) in Kontakt mit dem Hauptmaßband (11) sind, wobei die Rollen (20, 21) und die Welle (14) in Drehung um die Z-Achse über einen Freiheitsgrad zueinander verfügen, **dadurch gekennzeichnet, dass** es die folgenden Schritte umfasst:
• Lokale Führung des Hauptmaßbands (11) durch die Rollen (20, 21),
• Entfaltung des Hauptmaßbands (11) in einer im Wesentlichen parallelen Richtung zur X-Achse.

9. Verfahren zum versenkbaren Einbau nach Anspruch 8, wobei die Rollen Heizrollen sind, **dadurch gekennzeichnet, dass** es vorher einen lokalen Heizschritt des Hauptmaßbands (11) durch die Heizrollen (20, 21) umfasst.

10. Entfaltbare Struktur umfassend ein Hauptmaßband (11), das sich in entfalteter Position entlang einer X-Achse erstreckt und zwei Enden (81, 82) umfasst, ein Sekundärmaßband (61) umfassend zwei Enden (71, 72) und einen Aufrolldorn (13), der von einer Welle (14) entlang einer Z-Achse senkrecht zur X-Achse getragen wird, wobei das Hauptmaßband (11) um den Dorn (13) aufgewickelt wird, wobei ein erstes Ende (82) des Hauptmaßbands (11) auf dem Dorn (13) befestigt ist, **dadurch gekennzeichnet, dass** ein erstes Ende (71) des Sekundärmaßbands (61) auf dem Hauptmaßband (11) beabstandet vom ersten Ende (82) des Hauptmaßbands (11) befestigt wird, und dass ein zweites Ende (72) des Sekundärmaßbands (61) auf dem Dorn (13) an einem anderen Punkt als der Punkt des ersten Endes (82) des Hauptmaßbands (11) befestigt wird, um in entfalteter Position des Hauptmaßbands (11) eine dreieckige Struktur zwischen dem Hauptmaßband (11), dem Sekundärmaßband (61) und dem Dorn (13) zu bilden.

11. Entfaltbare Struktur nach Anspruch 10, **dadurch gekennzeichnet, dass** sie mindestens zwei Rollen (20, 21) umfasst, die gegenüber der Peripherie des Dorns (13) montiert sind, dass die Rollen (20, 21) in Kontakt mit dem Hauptmaßband (11) sind, dass die Rollen (20, 21) und die Welle (14) befestigt sind, wobei der Dorn (13) in Drehung um die Z-Achse über einen Freiheitsgrad verfügt, wobei die Rollen (20, 21) in der Lage sind, die Hauptmaßbänder (11, 111) zu führen.

12. Entfaltbare Struktur nach Anspruch 11, **dadurch gekennzeichnet, dass** die Rollen (20, 21) Heizrollen sind.

## Claims

1. Retractable tape spring in-building method for a deployable structure, comprising a main tape spring (11) extending in a deployed position along an axis X and comprising two ends (81, 82), a secondary tape spring (61) comprising two ends (71, 72) and a winding mandrel (13) carried by a shaft (14) along an axis Z perpendicular to the axis X, the main tape spring (11) being wound around the mandrel (13), a first end (82) of the main tape spring (11) being fixed to the mandrel (13),
**characterized in that** it comprises the following steps:
• fixing a first end (71) of the secondary tape spring (61) to the main tape spring (11) some distance from the first end (82) of the main tape spring (11),
• fixing a second end (72) of the secondary tape spring (61) to the mandrel (13) at a point distinct from the point of the first end (82) of the main tape spring (11), so as to form in a deployed position of the main tape spring (11) a triangulated structure between the main tape spring (11), the secondary tape spring (61) and the mandrel (13).

2. Retractable in-building method according to Claim 1, **characterized in that** it comprises beforehand a step of fixing a second end (81) of the main tape spring (11) at a distinct spot.

3. Retractable in-building method according to one of the preceding claims, **characterized in that** it comprises the following steps:
• simultaneous deployment of the main tape spring (11) substantially parallel to the axis X and of the secondary tape spring (61),
• formation of a triangulated structure between the main tape spring (11), the secondary tape spring (61) and the mandrel (13).

4. Retractable in-building method according to one of the preceding claims, **characterized in that** it further comprises a step of rewinding the main tape spring (11), and **in that** the rewinding of the main tape spring (11) is obtained by buckling the secondary tape spring (61).

5. Retractable in-building method according to Claim 4, the main tape spring (11) comprising two faces (15, 16), **characterized in that** the first end (71) of the secondary tape spring (61) is fixed to a first face (16) of the second end (81) of the main tape spring (11), and **in that** the buckling of the secondary tape spring (61) is obtained by applying a force to the middle of the secondary tape spring (61) and normal to the secondary tape spring (61).

6. Retractable in-building method according to Claim 5, **characterized in that** the force is applied between the first end (71) of the secondary tape spring (61) and the second end (81) of the main tape spring (11).

7. Retractable in-building method according to one of Claims 1 to 6, **characterized in that** it further comprises a step of fixing the first end (82) of the main tape spring (11) to the middle of the mandrel (13).

8. Retractable in-building method according to Claim 7, the deployable structure comprising at least two rollers (20, 21) mounted facing each other at the periphery of the mandrel (13), the rollers (20, 21) being in contact with the main tape spring (11), and the rollers (20, 21) and the shaft (14) having a degree of freedom to rotate about the axis Z relative to one another, **characterized in that** it comprises the following steps:
• local guidance of the main tape spring (11) by the rollers (20, 21),
• deployment of the main tape spring (11) in a direction substantially parallel to the axis X.

9. Retractable in-building method according to Claim 8, the rollers being heating rollers, **characterized in that** it comprises beforehand a step of local heating of the main tape spring (11) by the heating rollers (20, 21).

10. Deployable structure comprising a main tape spring (11) extending in a deployed position along an axis X and comprising two ends (81, 82), a secondary tape spring (61) comprising two ends (71, 72) and a winding mandrel (13) carried by a shaft (14) along an axis Z perpendicular to the axis X, the main tape spring (11) being wound around the mandrel (13), a first end (82) of the main tape spring (11) being fixed to the mandrel (13), **characterized in that** a first end (71) of the secondary tape spring (61) is fixed to the main tape spring (11) some distance from the first end (82) of the main tape spring (11), and **in that** a second end (72) of the secondary tape spring (61) is fixed to the mandrel (13) at a point distinct from the point of the first end (82) of the main tape spring (11), so as to form in a deployed position of the main tape spring (11) a triangulated structure between the main tape spring (11), the secondary tape spring (61) and the mandrel (13).

11. Deployable structure according to Claim 10, **characterized in that** it comprises at least two rollers (20, 21) mounted facing each other at the periphery of the mandrel (13), **in that** the rollers (20, 21) are in contact with the main tape spring (11), and **in that** the rollers (20, 21) and the shaft (14) are fixed, the mandrel (13) having a degree of freedom to rotate about the axis Z, the rollers (20, 21) being able to guide the main tape springs (11, 111).

12. Deployable structure according to Claim 11, **characterized in that** the rollers (20, 21) are heating rollers.
